# EUROPEAN PATENT APPLICATION

(11) **EP 4 815 398 A1**
(43) Date of publication of application: **30.09.2026**
(21) Application number: 24893816.9
(22) Date of filing: 21.08.2024
(51) Int. Cl.: H04L 45/24

(54) **COMMUNICATION RELAY SYSTEM AND COMMUNICATION RELAY DEVICE**

(30) Priority: 24.11.2023 JP 2023198838
(71) Applicant: Hitachi, Ltd., Tokyo 100-8280 (JP)
(72) Inventor: TANAKA Daisuke, Tokyo 100-8280 (JP); NISHIKAWA Satoshi, Tokyo 100-8280 (JP); NOMIZU Takuma, Tokyo 100-8280 (JP)
(74) Representative: MERH-IP Matias Erny Reichl Hoffmann Patentanwälte PartG mbB
(86) International application number: PCT/JP2024/029613
(87) International publication number: WO 2025/109821

(57) **Abstract**

A communication relay system includes two first communication relay devices to which either a working system or a standby system is set, the two first communication relay devices relaying the data between the first network and the first wireless network and between the first network the second wireless network, and two second communication relay devices to which either a working system or a standby system is set, the two second communication relay devices relaying the data to the second network between the second network and the first wireless network and between the second network the second wireless network. The first communication relay device set to be a working system relays data received from the first network to the first wireless network and the second wireless network, and the second communication relay device set to be a working system relays data received from the first wireless network and the second wireless network to the second network.

## Description

### Technical Field

The present invention relates to a communication relay system and a communication relay device.

### Background Art

With the advent of the 5th generation mobile communication system (5G: 5th Generation), wireless communication can be transmitted with a large capacity and a low delay, and use of wireless communication in control of vehicles such as automobiles and trains is being studied.

In addition, there is an advantage that the cost of constructing and maintaining the own dedicated line can be reduced by utilizing the public network line of the mobile communication carrier.

However, when wireless communication is used to control a vehicle, a wireless network has a narrower bandwidth than a wired communication network, and loss or delay of a communication packet due to congestion occurs. Therefore, there is a possibility that the vehicle cannot be controlled. Conventionally, in order to increase the reliability of communication, a method of duplicating a wireless network has been adopted.

PTL 1 describes a duplicating device that performs "Process of matching information between new operation device and standby device when failure occurs in operation device and standby device is switched to new operation device (when duplication switching occurs)".

### Citation List

### Patent Literature

PTL 1: JP 2001-014181 A

### Summary of Invention

### Technical Problem

The duplicating device described in PTL 1 described above is a device that performs duplicating control from a higher-level device to a lower-level device, and PTL 1 does not describe redundant control of a wireless network. Therefore, the technology described in PTL 1 cannot be applied to a vehicle control system using a wireless network.

The present invention has been made in view of such a situation, and an object thereof is to provide a communication relay system and a communication relay device that suppress a bandwidth in a wireless network.

### Solution to Problem

A communication relay system according to the present invention relays data transmitted and received between a first network and a second network via a first wireless network and a second wireless network. The communication relay system includes two first communication relay devices to which either a working system or a standby system is set, the two first communication relay devices relaying the data between the first network and the first wireless network and between the first network and the second wireless network, and two second communication relay devices to which either a working system or a standby system is set, the two second communication relay devices relaying the data to the second network between the second network and the first wireless network and between the second network and the second wireless network. The first communication relay device of a working system relays the data received from the first network to the first wireless network and the second wireless network, the first communication relay device set to be a standby system does not relay the data received from the first network to the first wireless network and the second wireless network, the second communication relay device of a working system relays the data received from the first wireless network and the second wireless network to the second network, and the second communication relay device set to be a standby system does not relay the data received from the first wireless network and the second wireless network to the second network.

### Advantageous Effects of Invention

According to the present invention, since only the communication relay device set to be the working system duplicates and relays data to the first wireless network and the second wireless network, a bandwidth in the wireless network can be suppressed.

Problems, configurations, and effects besides the above description will be apparent through the explanation on the following embodiments.

### Brief Description of Drawings

[FIG. 1] FIG. 1 is a block diagram illustrating an overall configuration example of a conventional communication relay system.
[FIG. 2] FIG. 2 is a block diagram illustrating a configuration example of a duplicated communication relay system according to an embodiment of the present invention.
[FIG. 3] FIG. 3 is a block diagram illustrating an internal configuration example of the communication relay device according to an embodiment of the present invention.
[FIG. 4] FIG. 4 is a block diagram illustrating a hardware configuration example of a computer according to an embodiment of the present invention.
[FIG. 5] FIG. 5 is a block diagram illustrating an example of a flow of data during normal operation according to an embodiment of the present invention.
[FIG. 6] FIG. 6 is a sequence diagram illustrating an operation example of each device of the communication relay system during normal operation according to an embodiment of the present invention.
[FIG. 7] FIG. 7 is a sequence diagram illustrating an operation example of each device of the communication relay system when a failure occurs in the communication relay device according to an embodiment of the present invention.
[FIG. 8] FIG. 8 is a sequence diagram illustrating an operation example of each device of the communication relay system when a failure occurs in the communication relay device which is set to be a working system according to an embodiment of the present invention.
[FIG. 9] FIG. 9 is a sequence diagram illustrating an operation example of each device of the communication relay system when recovering from a failure of the communication relay device according to an embodiment of the present invention.

### Description of Embodiments

Hereinafter, embodiments of the present invention will be described with reference to the accompanying drawings. In the present specification and the drawings, components having substantially the same function or configuration are denoted by the same reference numerals, and redundant description is omitted.

### <Configuration Example of Conventional Communication Relay System>

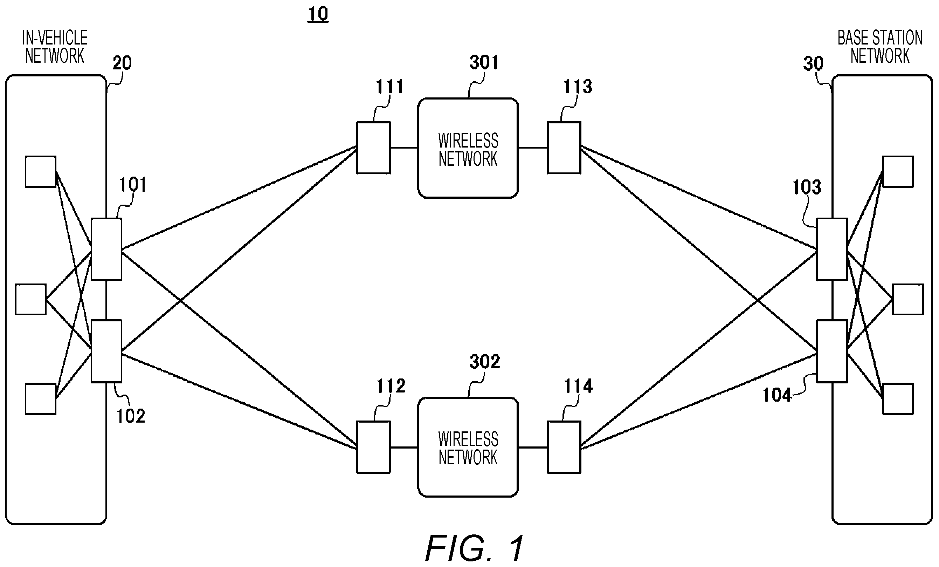

First, a configuration example of a conventional communication relay system 10 will be described with reference to FIG. 1.

FIG. 1 is a block diagram illustrating an overall configuration example of the conventional communication relay system 10. The conventional communication relay system 10 is configured by duplicating a general wireless network.

The communication relay system 10 includes an in-vehicle network 20, a base station network 30, wireless terminals 111, 112, 113, and 114, and wireless networks 301 and 302.

The in-vehicle network 20 is a network in a single vehicle (not illustrated). The vehicle in which the in-vehicle network 20 is constructed is assumed to be one automobile, a railroad train of a plurality of cars, or the like. A block in the in-vehicle network 20 is an information processing device such as a personal computer (PC) or an electronic control unit (ECU). The in-vehicle network 20 includes a gateway 101 and a gateway 102 connected to the wireless terminals 111 and 112.

The gateway 101 and the gateway 102 are connected to the wireless terminal 111 and the wireless terminal 112. Both the wireless terminal 111 and the wireless terminal 112 are assumed to be access points. In FIG. 1, the wireless terminal 111 and the wireless terminal 112 are illustrated at positions away from the in-vehicle network 20, but actually, the wireless terminal 111 and the wireless terminal 112 are included in the in-vehicle network 20.

The base station network 30 is a network constructed in one control station. The control station manages, for example, a current position, a destination, and the like of the vehicle. A block in the base station network 30 is an information processing device such as a PC or a control console. The base station network 30 includes a gateway 103 and a gateway 104 connected to the wireless terminals 113 and 114.

The gateway 103 and the gateway 104 are connected to the wireless terminal 113 and the wireless terminal 114. Both the wireless terminal 113 and the wireless terminal 114 are assumed to be access points. In FIG. 1, the wireless terminal 113 and the wireless terminal 114 are illustrated at positions away from the in-vehicle network 20, but actually, the wireless terminal 113 and the wireless terminal 114 are included in the in-vehicle network 20.

The wireless terminals 111 and 113 are connected to the wireless network 301, and can perform wireless communication between the wireless terminals 111 and 113. The wireless terminals 112 and 114 are connected to the wireless network 302, and can perform wireless communication between the wireless terminals 112 and 114. The wireless network 301 and the wireless network 302 may be provided by the same mobile communication carrier or may be provided by different mobile communication carriers.

The conventional communication relay system 10 illustrated in FIG. 1 has a configuration in which a gateway, a wireless terminal, and a wireless network are duplicated. Therefore, in the conventional communication relay system 10, data communication is not hindered even if a failure occurs at any location.

However, in the configuration of the conventional communication relay system 10 illustrated in FIG. 1, the same signal is transmitted from each gateway to a plurality of wireless networks (the wireless network 301 and the wireless network 302). That is, the same signal is transmitted twice from different gateways to one wireless network. Therefore, as compared with a configuration in which each device is not duplicated, twice as many signals are transmitted to one wireless network. As a result, the bandwidths of the wireless networks 301 and 302 are overburdened, and the communication cost is also extra.

### [Embodiment]

### <Configuration Example of Communication Relay System according to Present Embodiment>

Next, a configuration example of a communication relay system 100 according to an embodiment of the present invention will be described.

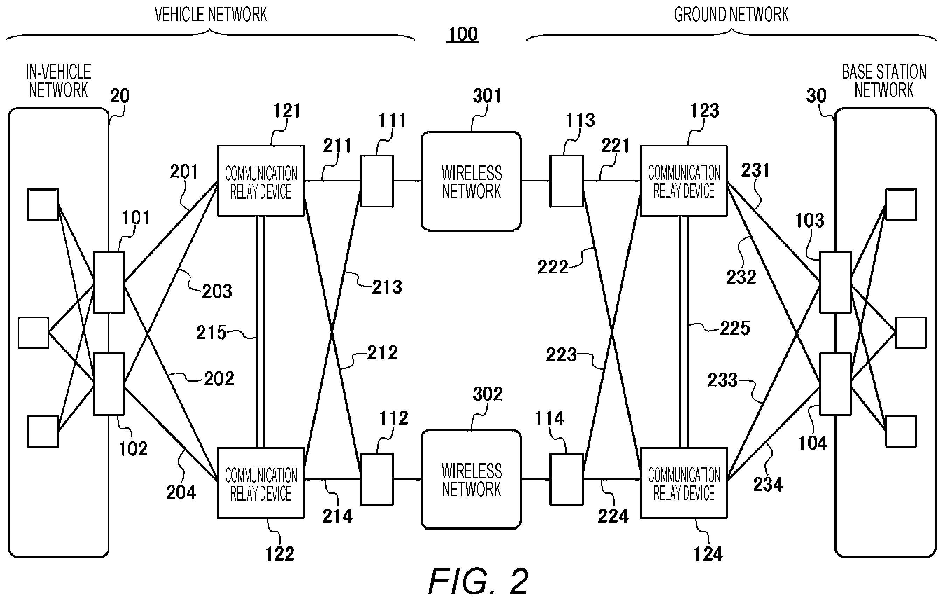

FIG. 2 is a block diagram illustrating a configuration example of a duplicated communication relay system 100 according to an embodiment. The communication relay system 100 is also configured by duplicating a general wireless network.

The communication relay system 100 has a function of relaying data transmitted and received between the in-vehicle network 20 and the base station network 30 via the wireless network 301 and the wireless network 302. In the communication relay system 100, a network and a device common to those in FIG. 1 are denoted by the same reference numerals. The communication relay system 100 includes a duplicated communication relay device. In the communication relay system 100, all communication networks other than the wireless network 301 (an example of a first wireless network) and the wireless network 302 (an example of a second wireless network) are wired paths.

The communication relay system 100 includes a communication relay device 121 and a communication relay device 122 (each one is an example of a first communication relay device) between the gateway 101 and the gateway 102, and between the wireless terminal 111 and the wireless terminal 112. The in-vehicle network 20 (an example of a first network) up to the wireless terminals 111 and 112 are configured on the vehicle side.

Therefore, the communication relay device 121 and the communication relay device 122 are installed in a vehicle. The vehicle network according to the present embodiment includes the communication relay device 121 and the communication relay device 122 in addition to the conventional in-vehicle network 20. In the communication relay devices 121 and 122, either a working system or a standby system that relays data between the in-vehicle network 20 and the wireless network 301 and between the in-vehicle network 20 the wireless network 302 is set.

The communication relay device 121 is connected to the gateways 101 and 102 and the wireless terminals 111 and 112. Specifically, the communication relay device 121 is connected to the gateway 101 by a communication line 201, and is connected to the gateway 102 by a communication line 203. Furthermore, the communication relay device 121 is connected to the wireless terminal 111 via a communication line 211, and is connected to the wireless terminal 112 via a communication line 212. As described above, the communication lines 211 and 212 are wired paths.

The communication relay device 122 is connected to the gateways 101 and 102 and the wireless terminals 111 and 112. Specifically, the communication relay device 122 is connected to the gateway 101 by a communication line 202, and is connected to the gateway 102 by a communication line 204. Furthermore, the communication relay device 122 is connected to the wireless terminal 111 via a communication line 213, and is connected to the wireless terminal 112 via a communication line 214.

The communication relay device 121 and the communication relay device 122 are connected by a communication line 215 (an example of a first communication line) duplicated so as to be able to communicate signals with each other. The communication relay devices 121 and 122 monitor the state of the own system and the other system by the communication line 215 connecting the communication relay devices 121 and 122 to each other, and share the setting and the state with each other.

By duplicating the communication line 215, even if one communication line 215 malfunctions, communication can be continued on the other communication line 215. The communication line 215 is used, for example, for the communication relay device 121 and the communication relay device 122 to transmit a heartbeat signal and a state signal to each other. Therefore, the communication line 215 is desirably a wired path.

The communication relay device 121 and the communication relay device 122 share information indicating which of the working system and the standby system is set. Furthermore, the communication relay device 121 and the communication relay device 122 share information indicating that a failure has occurred in the communication line 215 or that a failure has occurred in any of the communication relay devices 121 and 122.

When detecting that a failure has occurred in the communication relay device 121, the communication relay device 122 transitions from the standby system to the working system. Then, the communication relay device 122 takes over a process of duplicating and transmitting data to the wireless network 301 and the wireless network 302. The communication relay device 121 in which the occurrence of the failure is detected transitions from the working system to the standby system, and remains in the standby system even after recovering from the failure.

The wireless terminal 111 is connected to the wireless terminal 113 via the wireless network 301. The wireless terminal 112 is connected to the wireless terminal 114 via the wireless network 302.

The communication relay system 100 includes a communication relay device 123 and a communication relay device 124 (both are examples of the second communication relay device) between the gateway 103 and the gateway 104, and the wireless terminal 113 and the wireless terminal 114. The base station network 30 (an example of a second network) up to the wireless terminals 113 and 114 are configured on the ground side. Therefore, the communication relay device 123 and the communication relay device 124 are installed in a control station on the ground side.

The ground network according to the present embodiment includes the communication relay device 123 and the communication relay device 124 in addition to the conventional base station network 30. In the communication relay devices 123 and 124, either a working system or a standby system that relays data between the base station network 30 and the wireless network 301 and between the base station network 30 the wireless network 302 to the base station network 30 is set.

The communication relay device 123 is connected to the gateways 103 and 104 and the wireless terminals 113 and 114. Specifically, the communication relay device 123 is connected to the gateway 103 via a communication line 231, and is connected to the gateway 104 via a communication line 232. Furthermore, the communication relay device 123 is connected to the wireless terminal 113 via a communication line 221, and is connected to the wireless terminal 114 via a communication line 223. As described above, the communication lines 221 and 223 are wired paths.

The communication relay device 124 is connected to the gateways 103 and 104 and the wireless terminals 113 and 114. Specifically, the communication relay device 124 is connected to the gateway 103 via a communication line 233, and is connected to the gateway 104 via a communication line 234. Furthermore, the communication relay device 124 is connected to the wireless terminal 113 via a communication line 222, and is connected to the wireless terminal 114 via a communication line 224. As described above, the communication lines 222 and 224 are wired paths.

The communication relay devices 123 and 124 are connected by a communication line 225 (an example of a second communication line) duplicated so as to be able to communicate signals with each other. The communication relay devices 123 and 124 monitor the state of the own system and the other system by the communication line 225 connecting the communication relay devices 123 and 124 to each other, and share the setting and the state with each other. Since the communication line 225 is duplicated, the communication relay device 123 and the communication relay device 124 can continue communication on the other communication line 225 even if one communication line 225 malfunctions. The communication line 225 is used, for example, for the communication relay device 123 and the communication relay device 124 to transmit a heartbeat signal and a state signal to each other. Therefore, the communication line 225 is desirably a wired path.

The communication relay device 123 and the communication relay device 124 share information indicating which of the working system and the standby system is set. In addition, the communication relay device 123 and the communication relay device 124 share information indicating that a failure has occurred in the communication line 225 or that a failure has occurred in any of the communication relay devices 123 and 124. When detecting that a failure has occurred in the communication relay device 123, the communication relay device 124 transitions from the standby system to the working system. Then, the communication relay device 124 takes over a process of duplicating and transmitting data to the wireless network 301 and the wireless network 302. The communication relay device 123 in which the occurrence of the failure is detected transitions from the working system to the standby system, and remains in the standby system even after recovering from the failure.

Each of the communication relay devices (communication relay devices 121 to 124) can transition between the states of the working system (active state) and the standby system (idle state). For example, when the communication relay device 121 in the vehicle network is set to be a working system, the communication relay device 122 is set to be a standby system. As described above, when one communication relay device is set to be a working system, the other communication relay device is set to be a standby system.

The communication relay devices 121 and 122 periodically perform communication via the communication line 215, and the setting and state of the communication relay devices 121 and 122 are always shared. Similarly, the communication relay devices 123 and 124 periodically perform communication via the communication line 225, and the setting of the communication relay devices 123 and 124 and the state of the system are always shared.

When communication on the communication line 215 or the communication line 225 is interrupted, the communication relay device set to be the standby system determines that a failure has occurred in the communication relay device set to be the working system, and quickly transitions to the working system. In this case, the communication relay device set to be the working system does not transition to the standby system. Therefore, both communication relay devices are also allowed to be set to a working system.

Further, the transmission to the wireless network 301 and the wireless network 302 is performed only from the communication relay device set to be a working system. The communication relay device set to be the standby system does not transmit a signal to the wireless network 301 and the wireless network 302 even when receiving the signal from the gateway.

When receiving signals from the wireless network 301 and the wireless network 302, the communication relay device set to be the standby system may transmit a signal to a gateway connected to the communication relay device.

### <Internal Configuration Example of Communication Relay Device>

Here, an internal configuration example of the communication relay device will be described.

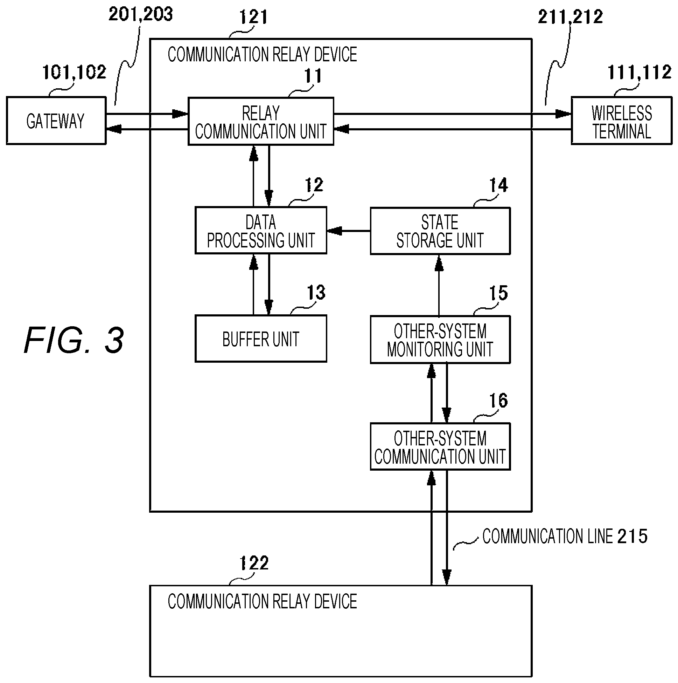

FIG. 3 is a block diagram illustrating an internal configuration example of the communication relay device 121. Since the communication relay devices 122 to 124 have the same internal configuration as the communication relay device 121, the description of the internal configuration example of the communication relay devices 122 to 124 will be omitted.

The communication relay device 121 relays data transmitted and received between the in-vehicle network 20 and the base station network 30 via the wireless network 301 and the wireless network 302. The communication relay device 121 includes a relay communication unit 11, a data processing unit 12, a buffer unit 13, a state storage unit 14, an other-system monitoring unit 15, and an other-system communication unit 16.

The relay communication unit 11 relays data to the wireless network 301 and the wireless network 302 when the working system is set, and does not relay data received from the in-vehicle network 20 to the wireless network 301 and the wireless network 302 when the standby system is set. For example, the relay communication unit 11 passes data received from the gateways 101 and 102 on the in-vehicle network 20 side via the communication lines 201 and 203 to the data processing unit 12. Then, the relay communication unit 11 transmits the data to which the transmission destination is assigned by the data processing unit 12 to the wireless terminal 111 via the communication line 211. Similarly, the relay communication unit 11 transmits the data to which the transmission destination is assigned by the data processing unit 12 to the wireless terminal 112 via the communication line 212.

Conversely, the relay communication unit 11 passes data received from the wireless terminals 111 and 112 via the communication lines 211 and 212 to the data processing unit 12. Then, the relay communication unit 11 transmits the data to which the transmission destination is assigned by the data processing unit 12 to the gateway 101 via the communication line 201. Similarly, the relay communication unit 11 transmits the data to which the transmission destination is assigned by the data processing unit 12 to the gateway 102 via the communication line 203.

The data processing unit 12 adds data of a transmission destination to the data received by the relay communication unit 11. Note that the data processing unit 12 may delete the information on the communication path from the data received by the wireless terminals 111 and 112 from the wireless networks 301 and 302 and transferred to the communication relay device 121.

When the communication relay device 121 is set to be a standby system, the buffer unit 13 stores data received by the relay communication unit 11 and processed by the data processing unit 12 for a certain period of time. The communication relay device 121 set to be the standby system does not transmit data to the wireless networks 301 and 302, but transitions to the working system when communication on the communication line 215 is interrupted.

After transmitting the data acquired from the buffer unit 13 to the wireless networks 301 and 302, the communication relay device 121 that has transitioned to the working system continues to transmit the data received from the gateways 101 and 102 to the wireless networks 301 and 302. With this operation, the communication relay device 121 can transmit data to the wireless networks 301 and 302 without losing data.

The state storage unit 14 stores the state of either the working system or the standby system set in the communication relay device 121 itself. The communication relay device 121 operates as a working system when the working system is stored in the state storage unit 14. On the other hand, if the standby system is stored in the state storage unit 14, the communication relay device 121 operates as the standby system. The data processing unit 12 refers to the state storage unit 14, and when the communication relay device 121 is set to be a working system, passes the processed data to the relay communication unit 11 and causes the wireless terminals 111 and 112 to transmit the data. On the other hand, the data processing unit 12 refers to the state storage unit 14, and if the communication relay device 121 is set to be a standby system, stores the processed data in the buffer unit 13.

The other-system monitoring unit 15 writes the setting and state of the communication relay device 122 acquired by the other-system communication unit 16 in the state storage unit 14, and monitors the communication relay device 122. For example, the other-system monitoring unit 15 monitors communication interruption of the communication line 215. When determining that the communication of the communication line 215 is not interrupted, the other-system monitoring unit 15 does not rewrite the state storage unit 14. However, if the other-system monitoring unit 15 determines that the communication of the communication line 215 is interrupted and the standby system is stored in the state storage unit 14, the other-system monitoring unit 15 rewrites the state storage unit 14 to the working system.

The other-system communication unit 16 is connected to the communication relay device 122 (an example of other communication relay device) via the communication line 215 and communicates with the communication relay device 122 via the communication line 215. For example, the other-system communication unit 16 transmits a heartbeat signal to the communication relay device 122 that is set to be the other system, and receives the heartbeat signal from the communication relay device 122. Further, the other-system communication unit 16 transmits a signal of the state (working system or standby system) of the own system to the communication relay device 122. Then, the other-system communication unit 16 transmits a signal of the state (standby system or working system) from the communication relay device 122 to the in-vehicle network 20.

### <Hardware Configuration Example of Computer>

Next, a hardware configuration of a computer 60 constituting the communication relay device 121 will be described.

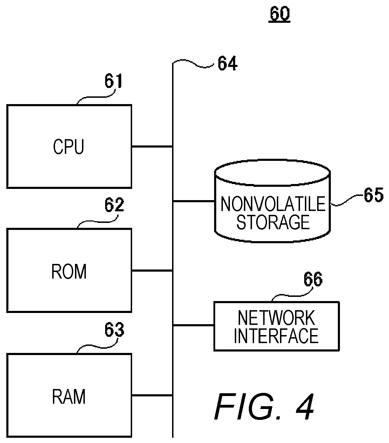

FIG. 4 is a block diagram illustrating a hardware configuration example of the computer 60. The computer 60 is an example of hardware used as a computer operable as the communication relay device 121 according to the present embodiment. Since the communication relay devices 122 to 124 have the same hardware configuration as the communication relay device 121, the description of the hardware configuration example of the communication relay devices 122 to 124 will be omitted.

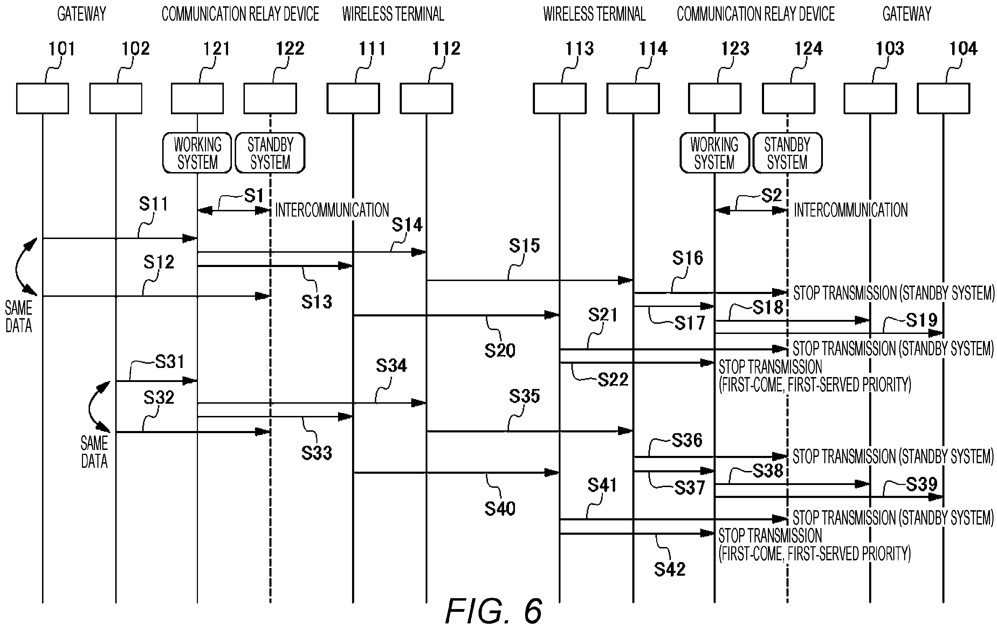

In the communication relay system 100 and the communication relay device 121 according to the present embodiment, each functional block is configured by the computer 60 (computer) executing a program, and the functional blocks cooperate to implement a communication relay method described later with reference to FIGS. 6, 8, and 9.

The computer 60 includes a central processing unit (CPU) 61, a read only memory (ROM) 62, and a random access memory (RAM) 63, each of which is connected to a bus 64. Moreover, the computer 60 includes a nonvolatile storage 65 and a network interface 66.

The CPU 61 reads a program code of software for realizing each function according to the present embodiment from the ROM 62, loads the program code into the RAM 63, and executes the program code. Variables, parameters, and the like generated during arithmetic processing of the CPU 61 are temporarily written to the RAM 63, and these variables, parameters, and the like are appropriately read by the CPU 61.

As the nonvolatile storage 65, for example, a hard disk drive (HDD), a solid state drive (SSD), or a nonvolatile memory is used. In addition to an operating system (OS) and various parameters, a program for causing the computer 60 to function is recorded in the nonvolatile storage 65. Programs, data, and the like necessary for the operation of the CPU 61 are recorded in the ROM 62 and the nonvolatile storage 65. That is, the ROM 62 and the nonvolatile storage 65 are used as an example of a non-transitory computer-readable storage medium storing a program to be executed by the computer 60.

As the network interface 66, for example, a network interface card (NIC) or the like is used. The network interface 66 transmits and receives various data between devices via a local area network (LAN), a dedicated line, or the like connected to a terminal of the NIC.

### <Flow of Data During Normal Operation>

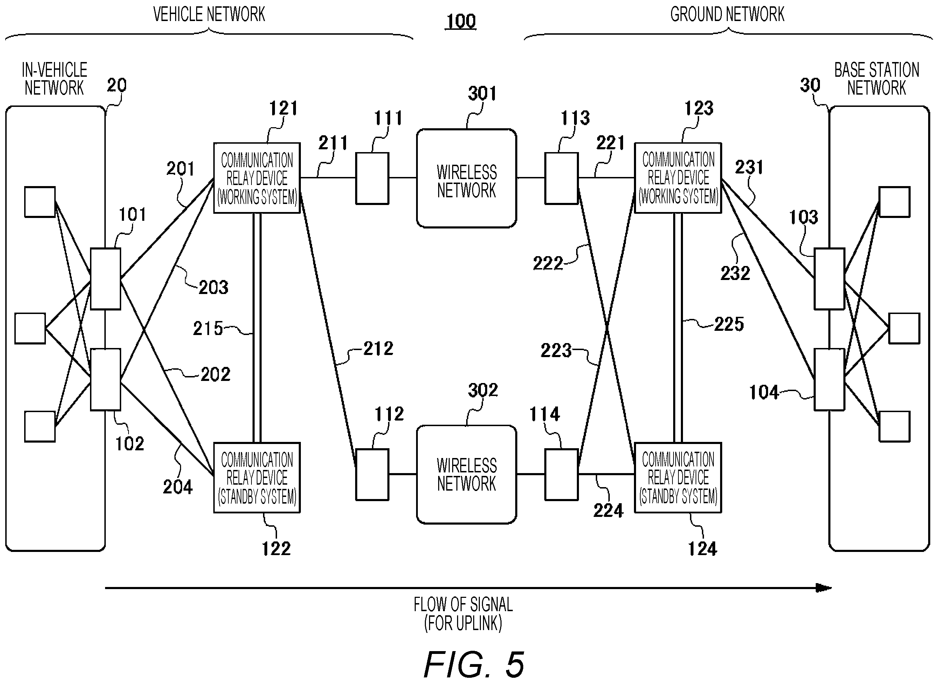

FIG. 5 is a block diagram illustrating an example of a flow of data during normal operation. The communication relay device 121 and the communication relay device 123 are set to be working systems, and the communication relay device 122 and the communication relay device 124 are set to be standby systems. In FIG. 5, only a path on which data is communicated is illustrated, and a path on which data is not transmitted is not illustrated.

Here, an uplink case where data is transmitted from the in-vehicle network 20 to the base station network 30 will be described. The gateway 101 transmits data to the communication relay device 121 via the communication line 201, and also transmits the same data to the communication relay device 122 via the communication line 202. The gateway 102 transmits data to the communication relay device 121 via the communication line 203, and also transmits the same data to the communication relay device 122 via the communication line 204.

For example, since the in-vehicle network 20 of a train and the like is redundant, the communication relay devices 121 and 122 receive the same data in duplicate. The data received by each of the communication relay devices 121 and 122 from the in-vehicle network 20 is not discarded. In addition, the communication relay device 121 set to be a working system relays data to the base station network 30 via the wireless networks 301 and 302.

That is, the communication relay device 121 which is set to be a working system relays data received from the in-vehicle network 20 to the wireless network 301 and the wireless network 302. In addition, the communication relay device 121 relays data received from the base station network 30 via the wireless network 301 and the wireless network 302 to the in-vehicle network 20.

For example, the communication relay device 121 transmits data to the wireless terminal 111 via the communication line 211, and also transmits the same data to the wireless terminal 112 via the communication line 212.

The communication relay device 122 which is set to be a standby system does not relay data received from the in-vehicle network 20 to the wireless network 301 and the wireless network 302. In addition, the communication relay device 122 does not relay data received from the base station network 30 via the wireless network 301 and the wireless network 302 to the in-vehicle network 20. Therefore, the communication relay device 122 does not transmit data to the wireless terminal 111 and the wireless terminal 112.

The wireless terminal 111 transmits data to the wireless terminal 113 via the wireless network 301. The wireless terminal 112 transmits data to the wireless terminal 114 via the wireless network 302.

The wireless terminal 113 transmits data to the communication relay device 123 via the communication line 221, and also similarly transmits data to the communication relay device 124 via the communication line 222. The wireless terminal 114 transmits data to the communication relay device 123 via the communication line 223, and also transmits the same data to the communication relay device 124 via the communication line 224.

The communication relay device 123 which is set to be a working system relays data received from the wireless network 301 and the wireless network 302 to the base station network 30. In addition, the communication relay device 123 relays data received from the base station network 30 to the wireless network 301 and the wireless network 302. For example, the communication relay device 123 transmits data to the gateway 103 via the communication line 231, and also transmits the same data to the gateway 104 via the communication line 232.

The communication relay device 124 which is set to be a standby system does not relay data received from the wireless network 301 and the wireless network 302 to the base station network 30. In addition, the communication relay device 124 does not relay data received from the base station network 30 to the wireless network 301 and the wireless network 302. For example, the communication relay device 124 does not transmit data to the gateways 103 and 104. The communication relay device 124 set to be the standby system may buffer data for a predetermined period. The communication relay device 124 buffers data, and thus, when an abnormality occurs in the communication relay device 123 which is set to be the working system, transitions to the working system and transmits the data to the base station network 30.

### <Sequence Diagram During Normal Operation>

FIG. 6 is a sequence diagram illustrating an operation example of each device of the communication relay system 100 during the normal operation. In FIG. 6, the communication relay devices 121 and 123 are set to be working systems, and the communication relay devices 122 and 124 are set to be standby systems.

The communication relay devices 121 and 122 communicate with each other (S1) and monitor their states.

Similarly, the communication relay devices 123 and 124 also communicate with each other (S2) and monitor their states.

First, a flow of data transmitted from the gateway 101 and an operation example of each device will be described.

The gateway 101 transmits data to the communication relay device 121 (S11), and transmits the same data to the communication relay device 122 (S12). Since the communication relay device 122 is set to be a standby system, it does not transmit data to the wireless terminals 111 and 112.

On the other hand, since the communication relay device 121 is set to be a working system, data is duplicated and transmitted to the wireless network 301 and the wireless network 302. For example, the communication relay device 121 transmits data received from the gateway 101 to the wireless terminal 111 (S13), and also transmits the same data to the wireless terminal 112 (S14).

The wireless terminal 112 transmits data to the wireless terminal 114 via the wireless network 302 (S15). The wireless terminal 114 transmits the data received via the wireless network 302 to the communication relay device 124 (S16) and also transmits the data to the communication relay device 123 (S17). Since the communication relay device 124 is set to be a standby system, data transmission is stopped.

Since the communication relay device 123 is set to be a working system, when receiving the duplicated data from the wireless network 301 and the wireless network 302, the communication relay device 123 relays the first-arrived data to the base station network 30. However, the communication relay device 123 does not relay the later-arrived data to the base station network 30. For example, the communication relay device 123 transmits data received from the wireless terminal 114 to the gateway 103 (S18), and transmits the same data to the gateway 104 (S19).

The wireless terminal 111 that has received the data from the communication relay device 121 in step 13 transmits the data to the wireless terminal 113 via the wireless network 301 (S20). The wireless terminal 113 transmits the received data to the communication relay device 124 (S21), and also transmits the same data to the communication relay device 123 (S22). Since the communication relay device 124 is set to be a standby system, data transmission is stopped. The communication relay device 123 is set to be a working system, but has already transmitted data in steps S18 and S19. Therefore, the communication relay device 123 stops the transmission of the same data by the first-come, first-served priority function.

Next, a flow of data transmitted from the gateway 102 and an operation example of each device will be described.

The gateway 102 transmits data to the communication relay device 121 (S31), and transmits the same data to the communication relay device 122 (S32). Since the communication relay device 122 is set to be a standby system, it does not transmit data to the wireless terminals 111 and 112.

On the other hand, since the communication relay device 121 is set to be a working system, the communication relay device 121 transmits data received from the gateway 102 to the wireless terminal 111 (S33), and also transmits the same data to the wireless terminal 112 (S34).

Since the flow of data and the operation example of each device in subsequent steps S35 to S42 are the same as the flow of data and the operation example of each device in steps S15 to S22, redundant description will be omitted.

Note that there is a case where data is not transmitted to the gateway 104, but there is also a specification under which it is sufficient if data is transmitted to the gateway 103. Therefore, the processing of steps S19,S21, and S22 of FIG. 6 may not be performed according to the specification of the communication relay devices 123 and 124.

### <Flow of Data at Occurrence of Failure>

Next, a flow of data when a failure occurs in the communication relay device 121 which is set to be a working system will be described.

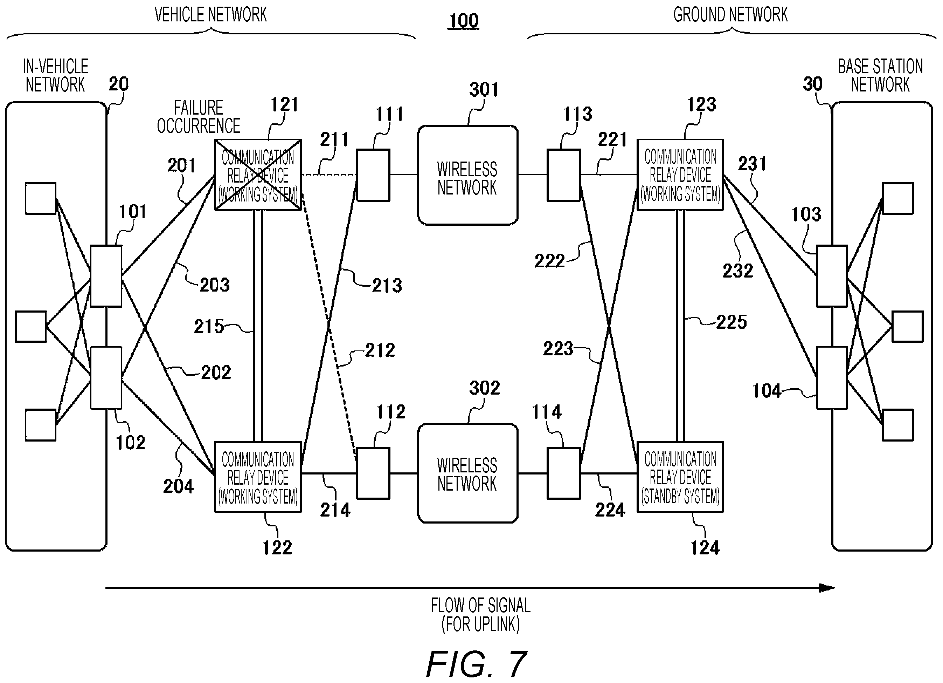

FIG. 7 is a sequence diagram illustrating an operation example of each device of the communication relay system when a failure occurs in the communication relay device 121.

When a failure occurs in the communication relay device 121, it is not known whether the communication relay device 121 has correctly transmitted data to the wireless terminals 111 and 112. Therefore, in FIG. 7, the communication lines 211 and 212 are indicated by broken lines.

When detecting the occurrence of a failure in the communication relay device 121, the communication relay device 122 acquiring the state of the communication relay device 121 from the communication line 215 immediately transitions from the standby system to the working system regardless of whether the communication relay device 121 is set to be the working system or the standby system. Thereafter, the communication relay device 122 transmits data to the wireless terminal 111 via the communication line 213, and also transmits the same data to the wireless terminal 112 via the communication line 214. Therefore, the communication relay device 122 can maintain continuity of data transmitted from the vehicle network to the ground network.

The wireless terminal 111 transmits data to the wireless terminal 113 via the wireless network 301. The wireless terminal 112 transmits data to the wireless terminal 114 via the wireless network 302. The subsequent flow of data is as described in FIG. 5.

Note that, in the case of recovering from the failure of the communication relay device 121, either the communication relay device 121 or the communication relay device 122 serves as the working system according to the initial setting value and the degree of failure. The communication relay device that has transitioned to the standby system does not transmit data to the wireless network 301 and the wireless network 302. Therefore, the wireless relay device that has transitioned to the standby system stops transmitting data to the wireless terminal. For example, a communication relay device having a high failure frequency should remain in the standby system even if it recovers from a failure. Therefore, the communication relay device having a high failure frequency is initially set to remain in the standby system even after recovering from the failure.

In addition, when the failure level is about warning, there is no problem even if the communication relay device 121 returns to the working system after recovering from the failure. However, in a case where the degree of failure is an error worse than the warning, or in a case where a failure occurs in the device, the communication relay device 121 does not normally operate even when returning to the working system after recovering from the failure. Therefore, in the communication relay device 121, the transition of the working system or the standby system at the time of failure recovery changes according to the degree of failure.

### <Sequence Diagram at Occurrence of Failure>

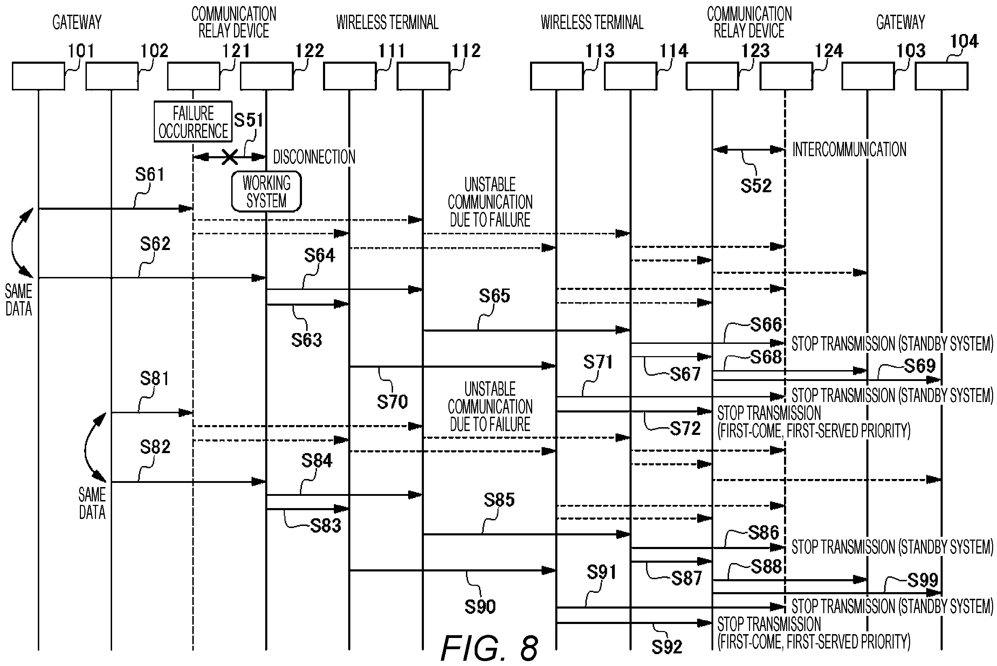

FIG. 8 is a sequence diagram illustrating an operation example of each device of the communication relay system 100 when a failure occurs in the communication relay device 121 set to be a working system.

When a failure occurs in the communication relay device 121, mutual communication by the communication relay devices 121 and 122 is interrupted (S51). Therefore, the communication relay device 122 transitions from the standby system to the working system. On the other hand, the communication relay devices 123 and 124 can communicate with each other (S52) and monitor their states.

First, a flow of data transmitted from the gateway 101 and an operation example of each device will be described.

The gateway 101 transmits data to the communication relay device 121 (S61), and transmits the same data to the communication relay device 122 (S62). Since a failure has occurred in the communication relay device 121, unlike the flow of data in FIG. 6, data transmission processing starting from the communication relay device 121 is not performed or communication becomes unstable.

Since the communication relay device 122 has transitioned to the working system, the communication relay device transmits the data received from the gateway 101 to the wireless terminal 111 (S63), and also transmits the same data to the wireless terminal 112 (S64).

Since the flow of data and the operation example of each device in subsequent steps S65 to S72 are the same as the flow of data and the operation example of each device in steps S15 to S22 of FIG. 6, redundant description will be omitted.

Next, a flow of data transmitted from the gateway 102 and an operation example of each device will be described.

The gateway 102 transmits data to the communication relay device 121 (S81), and transmits the same data to the communication relay device 122 (S82). Since a failure has occurred in the communication relay device 121, unlike the flow of data in FIG. 6, data transmission processing starting from the communication relay device 121 is not performed or communication becomes unstable.

Since the communication relay device 122 has transitioned to the working system, the communication relay device transmits the data received from the gateway 101 to the wireless terminal 111 (S83), and also transmits the same data to the wireless terminal 112 (S84).

Since the flow of data and the operation example of each device in subsequent steps S85 to S92 are the same as the flow of data and the operation example of each device in steps S15 to S22, redundant description will be omitted.

### <Sequence Diagram at Recovery of Failure>

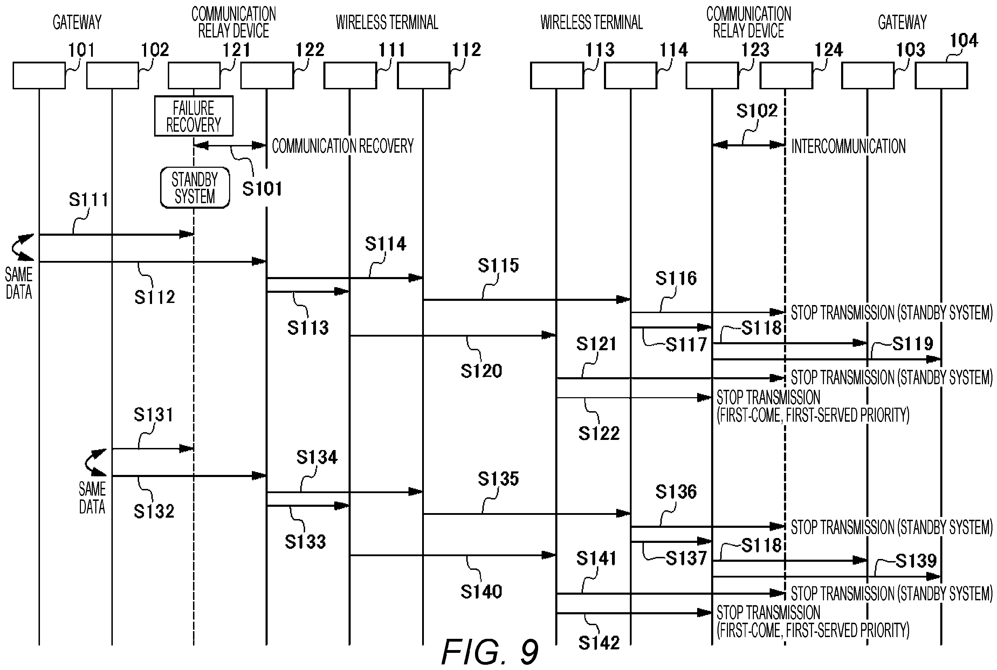

FIG. 9 is a sequence diagram illustrating an operation example of each device of the communication relay system 100 when recovering from the failure of the communication relay device 121.

As described above, even after recovering from the failure, the communication relay device 121 in which the failure has occurred does not transition to the working system and remains in the standby system. However, since the communication relay device 121 has recovered from the failure, the communication relay device 121 can communicate with the communication relay device 122 (S101), and the communication relay device 121 and the communication relay device 122 mutually monitor each other's state. In addition, the communication relay devices 123 and 124 can also communicate with each other (S102) and monitor their states.

First, a flow of data transmitted from the gateway 101 and an operation example of each device will be described.

The gateway 101 transmits data to the communication relay device 121 (S111), and transmits the same data to the communication relay device 122 (S112). Since the communication relay device 121 is set to be a standby system, it does not transmit data to the wireless terminals 111 and 112.

On the other hand, since the communication relay device 122 is set to be a working system, the communication relay device 122 transmits data received from the gateway 101 to the wireless terminal 111 (S113), and also transmits the same data to the wireless terminal 112 (S114).

Since the flow of data and the operation example of each device in subsequent steps S115 to S122 are the same as the flow of data and the operation example of each device in steps S15 to S22 of FIG. 6, redundant description will be omitted.

Next, a flow of data transmitted from the gateway 102 and an operation example of each device will be described.

The gateway 102 transmits data to the communication relay device 121 (S131), and transmits the same data to the communication relay device 122 (S132). Since the communication relay device 121 is set to be a standby system, it does not transmit data to the wireless terminals 111 and 112.

On the other hand, since the communication relay device 122 is set to be a working system, the communication relay device 122 transmits data received from the gateway 101 to the wireless terminal 111 (S133), and also transmits the same data to the wireless terminal 112 (S134).

Since the flow of data and the operation example of each device in subsequent steps S135 to S142 are the same as the flow of data and the operation example of each device in steps S15 to S22 of FIG. 6, redundant description will be omitted.

The flow of signals transmitted from the vehicle network to the ground network (in the case of uplink) has been described above. Note that the communication relay devices 121 to 124 also operate in the flow of signals transmitted from the ground network to the vehicle network (in the case of the downlink) contrary to the flow of signals in the case of the uplink. Here, the detailed description of the flow of signals in the downlink case and the operation of each device according to the sequence diagram will be omitted.

In the communication relay system 100 according to the embodiment described above, one of the two communication relay devices in the in-vehicle network 20 on the data transmission side is set to be a working system, and the other is set to be a standby system. The communication relay device set to be a working system transmits data to the wireless network, but the communication relay device set to be the standby system does not transmit data to the wireless network. Therefore, since there is no data transmitted from the communication relay device set to be the standby system in the wireless network, the bandwidth of the data transmitted to the wireless network can be reduced. Since the public network line of the mobile communication carrier is often a pay-per-use system, the communication relay system 100 according to the present embodiment has an effect of suppressing the communication cost.

In addition, in the communication relay system 100 according to the present embodiment, two communication relay devices monitor operations of each other, and when a failure occurs in the communication relay device set to be a working system and communication is interrupted, the communication relay device set to be the standby system is immediately switched to the working system. Thereafter, since the communication relay device switched to the working system transmits data to the wireless network, the dead time of communication is shortened, and data loss can be prevented. In addition, data reliably reaches a gateway located beyond the wireless network.

In addition, since the communication relay device which has recovered from the failure operates while remaining in the standby system, the communication relay device does not transmit unnecessary data to the wireless network. Therefore, the bandwidth of the wireless network is not overburdened by data.

Two communication relay devices are also installed on the data reception side, and the two communication relay devices monitor operations of each other. Then, the data received from the wireless network by the wireless terminal on the data reception side is transmitted to the communication relay device on the data reception side, and the data is transferred from the communication relay device to the gateway on the data reception side.

Here, the communication relay device on the data reception side preferentially transmits data first received from the wireless terminal to the gateway, and does not transmit data received later from another wireless terminal to the gateway. Therefore, the gateway on the data reception side does not receive the same data redundantly, and does not need to perform duplication determination processing, data discard processing, and the like related to data reception.

Note that the present invention is not limited to the above-described embodiments, and it goes without saying that various other application examples and modifications can be taken without departing from the gist of the present invention described in the claims.

For example, the above-described embodiments describe the configurations of the system in detail and specifically in order to describe the present invention in an easy-to-understand manner, and are not necessarily limited to those having all the described configurations. Furthermore, some of the configurations of the present embodiment may be omitted, replaced with other configurations, and other configurations may be added.

Furthermore, only control lines and information lines considered to be necessary for explanation are illustrated, but not all the control lines and the information lines in a product are illustrated. In practice, almost all the configurations may be considered to be connected to each other.

### Reference Signs List

11 relay communication unit
12 data processing unit
13 buffer unit
14 state storage unit
15 other-system monitoring unit
16 other-system communication unit
20 in-vehicle network
30 base station network
100 communication relay system
101 to 104 gateway
111 to 114 wireless terminal
121 to 124 communication relay device
201 to 204, 211 to 215, 221 to 225, 231 to 234 communication line
301, 302 wireless network

## Claims

1. A communication relay system that relays data transmitted and received between a first network and a second network via a first wireless network and a second wireless network, the communication relay system comprising:
two first communication relay devices to which either a working system or a standby system is set, the two first communication relay devices relaying the data between the first network and the first wireless network and between the first network the second wireless network; and
two second communication relay devices to which either a working system or a standby system is set, the two second communication relay devices relaying the data to the second network between the second network and the first wireless network and between the second network the second wireless network, wherein
the first communication relay device set to be a working system relays the data received from the first network to the first wireless network and the second wireless network,
the first communication relay device set to be a standby system does not relay the data received from the first network to the first wireless network and the second wireless network,
the second communication relay device set to be a working system relays the data received from the first wireless network and the second wireless network to the second network, and
the second communication relay device set to be a standby system does not relay the data received from the first wireless network and the second wireless network to the second network.

2. The communication relay system according to claim 1, wherein
the first communication relay device set to be a working system duplicates the data and transmits the duplicated data to the first wireless network and the second wireless network, and
the second communication relay device set to be a working system receives the duplicated data from the first wireless network and the second wireless network, relays the data that arrives first to the second network, and does not relay the data that arrives later to the second network.

3. The communication relay system according to claim 2, wherein
the two first communication relay devices monitor states of an own system and another system by a first communication line connecting the two first communication relay devices to each other, and share settings and states with each other, and
the two second communication relay devices monitor states of an own system and another system by a second communication line connecting the two second communication relay devices to each other, and share settings and states with each other.

4. The communication relay system according to claim 3, wherein when detecting that a failure has occurred in the first communication relay device set to be a working system, the first communication relay device set to be a standby system transitions from a standby system to a working system, and takes over a process of duplicating and transmitting the data to the first wireless network and the second wireless network.

5. The communication relay system according to claim 4, wherein the first communication relay device, in which occurrence of a failure is detected, transitions from a working system to a standby system and remains in a standby system even after recovering from the failure.

6. The communication relay system according to claim 4, wherein the first communication relay device, in which occurrence of a failure is detected, transitions from a working system to a standby system, and after recovering from the failure, any one of the first communication relay devices becomes a working system according to an initial setting and a degree of the failure, and the first communication relay device that has transitioned to a standby system does not transmit the data to the first wireless network and the second wireless network.

7. The communication relay system according to claim 4, wherein the setting is information indicating which of a working system and a standby system is set, and the state is information indicating that a failure has occurred in the first communication line or the second communication line, or that a failure has occurred in the first communication relay device or the second communication relay device.

8. The communication relay system according to claim 4, wherein
the first communication relay device set to be a working system relays data received from the second network via the first wireless network and the second wireless network to the first network,
the first communication relay device set to be a standby system does not relay data received from the second network via the first wireless network and the second wireless network to the first network,
the second communication relay device set to be a working system relays the data received from the second network to the first wireless network and the second wireless network, and
the second communication relay device set to be a standby system does not relay the data received from the second network to the first wireless network and the second wireless network.

9. A communication relay device that relays data transmitted and received between a first network and a second network via a first wireless network and a second wireless network, the communication relay device comprising:
a state storage unit that stores a state in which either a working system or a standby system is set; and
a relay communication unit that relays the data to the first wireless network and the second wireless network when a working system is set, and does not relay the data received from the first network to the first wireless network and the second wireless network when a standby system is set.

10. The communication relay device according to claim 9, comprising:
an other-system communication unit that is connected to the other communication relay device via a communication line and communicates with the other communication relay device via the communication line; and
an other-system monitoring unit that writes settings and states of the other communication relay device acquired by the other-system communication unit in the state storage unit and monitors the other communication relay device.
